# EUROPÄISCHE PATENTANMELDUNG

(11) **EP 4 509 220 A1**
(43) Veröffentlichungstag der Anmeldung: **19.02.2025**
(21) Anmeldenummer: 24193601.2
(22) Anmeldetag: 08.08.2024
(51) Int. Cl.: B05B 13/04, B05B 15/65, B08B 3/02

(54) **SPRITZREINIGER MIT EINFACH ANGETRIEBENEN, SCHWENKBAREN REGISTERN**

(30) Priorität: 16.08.2023 DE 102023121954
(71) Anmelder: Maschinenbau Silberhorn GmbH, 92331 Lupburg (DE)
(72) Erfinder: Wiesner, Dominik, 92331 Lupburg (DE); Burger, Thomas, 92331 Lupburg (DE)
(74) Vertreter: Misselhorn, Hein-Martin

(57) **Zusammenfassung**

Eine Spritzreinigungsmaschine (1) bevorzugt in Gestalt einer Kammerreinigungsanlage mit einer Reinigungskammer (7), in die das Reinigungsgut eingebracht wird, und mehreren in der Reinigungskammer (7) hineinragenden Spritzrohren (3), die bevorzugt jeweils mehrere Düsen (4) zum Abspritzen des Reinigungsgutes mit dem Reinigungsfluid aufweisen, wobei die mehreren Spritzrohre (3) um ihre als solche ortsfeste Längsachse (L) rotierend schwenkbeweglich gelagert sind und die mehreren Spritzrohre (3) gruppenweise oder, bevorzugt, alle von einem gemeinsamen Antrieb hin- und herschwenkend angetrieben werden, dadurch gekennzeichnet, dass von den mehreren Spritzrohren (3) zumindest eines, besser zumindest zwei jeweils mit mindestens einem Zusatzspritzrohr (22) gekoppelt sind, dessen Zusatzspritzrohrlängsachse (LZ) quer und bevorzugt orthogonal zur Längsachse (L) des betreffenden Spritzrohrs (3) verläuft.

## Beschreibung

Die Erfindung betrifft das Gebiet der industriellen Reinigungstechnik und auf diesem Gebiet eine Spritzreinigungsmaschine nach dem Oberbegriff des Anspruchs 1.

### TECHNISCHER HINTERGRUND

In vielen Anwendungsfällen müssen durch Gießen mit verlorener Form und/oder durch spanende Bearbeitung hergestellte Bauteile gereinigt werden, nachdem sie ihre endgültige Gestalt erhalten haben. Der Reinigungsbedarf ist oft umso höher, je komplexer die Bauteile gestaltet sind. Denn gerade in Sacklöchern, Hinterschnitten und Kavitäten lagern sich nicht selten Formsand-, Span- und/oder Kühlschmierstoffreste ab, die dort nicht bleiben können. Man denke beispielsweise an gegossene und spanend auf Maß gebrachte Zylinderköpfe von Verbrennungsmotoren. In deren Ansaugtrakt, in deren Abgastrakt (gerade Turbolader mit VTG sind sehr schmutzempfindlich) und in deren Ölkanälen dürfen sich in einbaufertigem Zustand keine Sand-, Span- oder Gratreste mehr befinden.

Teilweise noch anspruchsvolleren Reinigungsbedarf haben Bauteile, die im Anschluss an ihre Formgebung oberflächenbehandelt werden sollen, beispielsweise galvanisch, chemisch oder durch Lack- bzw. Pulverbeschichtung.

Ein bekanntes und industriell bewährtes Reinigungsverfahren ist das sogenannte Spritzreinigen.

Beim Spritzreinigen wird ein - in der überwiegenden Zahl der Fälle - wässeriges Reinigungsmedium mit Hilfe von Düsen auf das zu reinigende Bauteil aufgebracht, mit hinreichend hoher kinetischer Energie. Die hohe kinetische Energie des Wasserstrahls löst Verschmutzungen.

Um eine möglichst gründliche Reinigung zu erreichen, ist es bekannt, das zu reinigende Werkstück mit Hilfe von mehreren um den Umfang des Werkstücks herumgruppierten Registern von mehreren Seiten anzuspritzen und am besten auch das Werkstück relativ zu den Registern rotieren zu lassen.

Je nach Werkstück werden aber auch hiermit noch keine hundertprozentig überzeugenden Ergebnisse erzielt. Denn es bleiben auch bei dieser Vorgehensweise gerade bei anspruchsvoller gestalteten Bauteilen nach wie vor noch viele Wandbereiche, die von dem jeweiligen Strahl des Registers nicht direkt oder nur unter einem ganz flachen Winkel getroffen werden. Diese Wandbereiche werden daher nicht energiereich genug getroffen, um einer wirklich guten Reinigung unterzogen zu werden.

Einen neuralgischen Punkt bilden darüber hinaus insbesondere Sacklöcher - und sonstige Kavitäten und Hinterschnitte, für die das nachfolgend am Beispiel der Sacklöcher Erläuterte entsprechend gilt.

Trifft der Strahl des Registers zu steil auf das einen Spanrest oder sonstige Verschmutzungen enthaltende Sackloch, dann vermag er den Spanrest oder die sonstige Verschmutzung nicht endgültig aus dem Sackloch auszutragen. Vielmehr ist es dann der Strahl selbst, der zwar den Spanrest oder die Verschmutzung eine intensive Wirbelbewegung in dem Sackloch ausführen lässt, aber dann doch immer wieder in Richtung des Grundes des Sacklochs zurückwirft, bevor der Spanrest oder die Verschmutzung das Sackloch endgültig verlassen können.

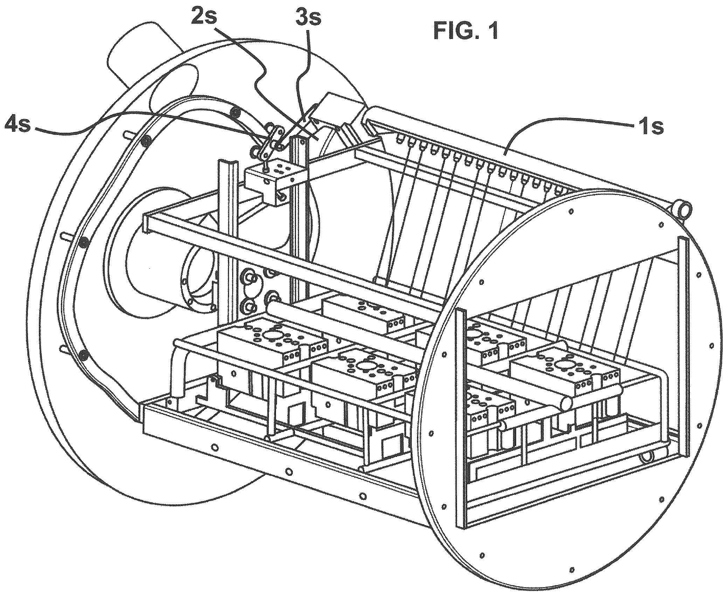

Um an dieser Stelle eine Verbesserung zu schaffen, ist bereits die schematisch von der Figur 1 gezeigte Spritzreinigungsmaschine vorgeschlagen worden. Bei ihr läuft das eine Düsenreihe tragende und damit ein düsenbestücktes Register bildende Rohr 1s an einem Arm 2s auf einer Kreisbahn um die hier in einem Korb gehaltenen, zu reinigenden Werkstücke um. Das Rohr 1s ist dabei mit einem Kurbelarm 3s verbunden, dessen anderes Ende von dem Kurbelwagen 4s betätigt wird, der entlang der unrunden Kurbelsteuerschiene 5s umläuft. Mittels der unrunden Steuerschiene 5s, des Kurbelwagens 4s und des Kurbelarms 3s wird dem das Düsenregister bildenden Rohr während seines Umlaufs auf seiner Kreisbahn eine Hin- und Her-Schwenkbewegung von ca. +/- 35° aufgezwungen. Diese Schwenkbewegung verbessert die Reinigungsleistung. Das gilt in besonderem Maß, wenn man zusätzlich das oder die zu reinigenden Werkstücke mit ihrem Korb rotieren lässt.

Diese Art des Schwenkantriebs des das Register bildenden Rohres mittels Kurbelsteuerschiene und Kurbelwagen ist schon per se aufwendig. Diese Art des Schwenkantriebs erfordert zudem zwingend, dass das das Register bildende Rohr permanent das Reinigungsgut umkreist. Das bringt ebenfalls Aufwand mit sich und erfordert auch zusätzlichen Bauraum, da sichergestellt werden muss, dass das Reinigungsgut von dem das Düsenregister bildenden Rohr im Zuge des Umkreisens ungehindert unterfahren werden kann.

### ZUGRUNDE LIEGENDES PROBLEM

Demzufolge liegt der Erfindung das Problem zugrunde, eine Spritzreinigungsmaschine zu schaffen, deren Reinigungseffizienz gegenüber den bisher bekannten Spritzreinigungsmaschinen noch weiter verbessert ist.

### DIE ERFINDUNGSGEMÄSSE LÖSUNG

Das zugrunde liegende Problem wird erfindungsgemäß durch eine Spritzreinigungsmaschine mit den Merkmalen des Anspruchs 1 gelöst.

Dementsprechend wird als erfindungsgemäße Lösung eine Spritzreinigungsmaschine mit einer Reinigungskammer, in die das Reinigungsgut eingebracht wird, vorgeschlagen. Es sind mehrere in die Reinigungskammer hineinragende Spritzrohre zum Abspritzen des Reinigungsgutes mit dem Reinigungsfluid vorgesehen, die um das Reinigungsgut herum gruppiert sind, wenn es seine für die Reinigung bestimmungsgemäß vorgesehene Position einnimmt. Dabei zeichnet sich die erfindungsgemäße Spritzreinigungsmaschine dadurch aus, dass die mehreren Spritzrohre um ihre als solche ortsfeste Längsachse rotierend schwenkbeweglich gelagert sind und die mehreren Spritzrohre gruppenweise oder, idealerweise, alle von einem gemeinsamen Antrieb, zumeist in Gestalt eines Elektromotors, hin- und herschwenkend angetrieben werden.

Die erfindungsgemäße Spritzreinigungsanlage zeichnet sich dadurch aus, dass von ihren mehreren Spritzrohren zumindest eines, besser zumindest zwei und idealerweise alle jeweils mit mindestens einem Zusatzspritzrohr gekoppelt sind, dessen Zusatzspritzrohrlängsachse quer und bevorzugt orthogonal zur Längsachse des betreffenden Spritzrohrs verläuft. Auf diese Art und Weise kann das zu reinigende Gut aus mindestens einer und idealerweise zwei zusätzlichen Richtungen besprüht werden - in manchen, optionalen Fällen nach Art eines "Kreuzfeuers", weil sich die Sprühstrahlen aus einem Zusatzspritzrohr (richtungsmäßig) zyklisch oder sogar überwiegend bzw. dauerhaft mit den Sprühstrahlen aus mindestens einem der Spritzrohre schneiden.

Dabei ist der entscheidende Vorteil der erfindungsgemäßen Kopplung (durch unmittelbaren Formschluss oder z. B. nur in Spezialfällen bevorzugt über ein weiteres Getriebe als zu vereitelnder Umgehungsversuch) zwischen einem Spritzrohr und dem oder den ihm zugeordneten Zusatzspritzrohren, dass kein zusätzlicher Antrieb für das jeweilige Zusatzspritzrohr gebraucht wird.

Optional ist dabei der Elektromotor allein für das Hin- und Herschwenken der Spritzrohre und der Zusatzspritzrohre zuständig und nicht für den sonstigen Antrieb, wie z. B. das vollständige Umlaufen-Lassen der Spritzrohre auf einer Kreisbahn um das Reinigungsgut herum. Daher kann der Elektromotor genau so angesteuert werden, wie es für die Schwenkbewegungen optimal ist.

### OPTIONALE WEITERBILDUNGSMÖGLICHKEITEN

Bevorzugt ist, dass das oder die Zusatzspritzrohre jeweils mehrere Spritzdüsen aufweisen, was die Reinigungswirkung vergleichmäßigt.

In vielen Fällen ist der lichte Innendurchmesser der Zusatzspritzrohre kleiner als der der Spritzrohre. So werden die örtlich abgegebenen Spritzmengen eingestellt, womit überall die gewünschte Reinigungsintensität gewährleistet ist.

Bevorzugt werden das oder die Zusatzspritzrohre jeweils von einem Spritzrohr, meist über eine Öffnung in dessen Mantelfläche, mit Spritzflüssigkeit gespeist. Das vereinfacht nicht nur die Versorgung der Zusatzspritzrohre mit Spritzflüssigkeit. Vielmehr führt diese Art der Versorgung auch dazu, dass gattungsgemäße Spritzreinigungsmaschinen, die aber nur über vier oder mehr parallele Spritzrohre verfügen, sehr einfach mit Zusatzspritzrohren nachgerüstet werden können.

Anzumerken ist, dass die Zusatzspritzrohre besonders von ihrer Befestigung an schwenkbaren Spritzrohren profitieren, da sie wiederum beiseite geschwenkt werden können, wenn der Korb mit dem zu reinigenden Gut über die Vorderseite eingeschoben und entladen werden soll.

Besonders günstig aber nicht zwingend ist es, wenn das oder die Zusatzspritzrohre jeweils einen entsprechend gekrümmten Anschlussflansch haben, der dichtend gegen die Mantelfläche des betreffenden Spritzrohres anliegt. Auch das vereinfacht die Nachrüstung, da das jeweilige Spritzrohr zur nachträglichen Befestigung des Zusatzspritzrohr lediglich angebohrt und eventuell mit einem Gewinde versehen werden muss, wenn nicht auf der Rohrinnenseite eine Mutter gesetzt wird. Alternativ reicht es, dass jedes dieser zusätzlichen Spritzrohre mechanisch fest, oder aber in anderer Ausführungsform auswechselbar angebunden ist.

Idealerweise ist mindestens ein Spritzrohr an seinem völlig freien Ende mit einem Zusatzspritzrohr gekoppelt. Idealerweise ist mindestens ein Spritzrohr an seinem antriebsseitigen Ende mit einem Zusatzspritzrohr gekoppelt. Wenn beide genannten Fälle gleichzeitig vorliegen, können die Zusatzspritzrohre im Zuge der von ihnen vollführten Schwenkbewegung jeweils größere Flächen überstreichen, ohne sich gegenseitig zu behindern.

Idealerweise verfügt die erfindungsgemäße Spritzreinigungsmaschine vier achsparallel zueinander angeordnete Spritzrohre. Die Spritzrohre bilden dabei ein erstes Paar Spritzrohre aus zwei maximal voneinander entfernten Spritzrohren. Diese beiden Spritzrohre sind jeweils am freien Spritzrohrende mit einem Zusatzspritzrohr gekoppelt. Durch den maximalen Abstand der Zusatzspritzrohre kann jedes der Zusatzspritzrohre eine besonders große Fläche bestreichen, ohne dass sich die Zusatzspritzrohre gegenseitig behindern.

Zusätzlich oder stattdessen bilden die Spritzrohre dabei ein zweites Paar Spritzrohre aus zwei maximal voneinander entfernten Spritzrohren. Diese beiden Spritzrohre sind jeweils am antriebsseitigen Spritzrohrende mit einem Zusatzspritzrohr gekoppelt.

Auch der (von den Zusatzspritzrohren abgesehene) übrige Antrieb und die übrige Ausgestaltung der Maschine haben merkliche Vorteile.

Dadurch, dass mehrere Spritzrohre vorgesehen und um das Reinigungsgut herumgruppiert sind und jedes dieser Spritzrohre hin- und herschwenkend angetrieben wird, ist es für viele Anwendungsfälle verzichtbar, das Reinigungsgut von dem oder den Spritzrohren umkreisen zu lassen. Das verringert den Aufwand und trägt ggf. zu einer kompakten Bauweise bei. Gleichzeitig wird durch das Hin- und Herschwenken aller Spritzrohre erreicht, dass ein zu reinigendes Werkstück im Laufe des Reinigungszyklus aus sehr unterschiedlichen Richtungen von den Fluidstrahlen getroffen wird - die zudem nicht nur vom ihm am nächsten liegenden Spritzrohr ausgehen, sondern meist auch in nicht unwesentlichem Maß von einem oder - besser - mehreren benachbarten Spritzrohren. Zudem wird die Reinigungsdauer jeder einzelnen Charge signifikant verkürzt, wenn permanent mehrere Spritzrohre gleichzeitig auf das Reinigungsgut spritzen.

Dadurch, dass die Spritzrohre gruppenweise oder, bevorzugt, alle von einem gemeinsamen Antrieb hin- und herschwenkend angetrieben werden, wird zugleich auch der Aufwand für das Schwenken der Spritzrohre signifikant verringert.

Bei alledem ist es eine interessante Option, dass die Spritzrohre sehr leicht ausgebaut werden können, was eine hohe Wartungsfreundlichkeit mit sich bringt.

Um ein besseres Verständnis der zur Beschreibung der erfindungsgemäßen Lösung verwendeten Begriffe zu erreichen, ist Folgendes anzumerken:
Der Begriff der Reinigungskammer wird hier aus rechtlichen Gründen zunächst sehr weit verstanden, auch im Sinne eines nicht zwangsläufig von der Umgebung separierten Reinigungsbereichs. In der Praxis ist es allerdings meist doch so, dass die Reinigungskammer ein im Betrieb im Wesentlichen fluiddicht geschlossener Behälter ist, der über eine Tür von oben her (Toplader) oder von einer Stirnseite her (Frontlader) beladbar ist - ähnlich, wie man das im Kleinen vom häuslichen Geschirrspüler mit seinem Spülraum, dem sogenannten Bottich, kennt. Diese Ausgestaltungsform ist daher klar bevorzugt. Zum Zwecke eventueller späterer, nachträglicher Einschränkung kann man die hier in Rede stehende Spritzreinigungsmaschine dann auch als Bottich- oder Kammerreinigungsanlage bezeichnen. Das Reinigungsgut kann aus einem oder mehreren bevorzugt auf einem Rost gelagerten Stückgütern bestehen, wie etwa einem oder mehreren Zylinderköpfen. Das Reinigungsgut kann aber auch aus Schüttgut bestehen, das korbweise eingebracht wird.

Der Begriff des Spritzrohrs bezeichnet ein Rohr, das mindestens einen Fluidstrahl in Richtung des Reinigungsguts wirft. Dieser mindestens eine Fluidstahl könnte theoretisch ein einzelner flächiger Breitstrahl sein, nach Art einer "Fluidklinge". Das sei aus patentrechtlichen Gründen gesagt. Im Regelfall wird ein Spritzrohr mehrere - bevorzugt zumindest im Wesentlichen parallel abgehende - Fluidstrahlen in Richtung des Reinigungsguts werfen. Das Spritzrohr kann dann als Register bezeichnet werden oder als Düsenregister, bei Bestückung mit Düsen.

Bevorzugt wird mindestens ein erstes Spritzrohr durch eine erste Schubstange und idealerweise werden mindestens zwei erste Spritzrohre durch jeweils eine erste Schubstange angetrieben, die exzentrisch an der um sich selbst rotierenden Motorabtriebswelle angelenkt ist, deren Drehachse im Regelfall ortsfest relativ zu den Dreh- bzw. Schwenkachsen des oder der Spritzrohre ist. Auf diese Art und Weise kann eine simple Drehbewegung eines Elektromotors mit geringem Aufwand in eine, zwei oder mehrere Schwenkbewegungen umgewandelt werden, ohne dass erst ein Kurbelwagen an einer Kurbelsteuerschiene entlanggeführt werden muss. Ideal ist es, wenn mindestens ein weiteres und bevorzugt mehrere weitere Spritzrohre jeweils durch eine weitere Schubstange angetrieben werden, die auf ihrer Antriebsseite an einem Exzenter eines vorhergehenden Spritzrohres angelenkt ist und über diesen angetrieben wird, und die auf ihrer Abtriebsseite an einem Exzenter des weiteren Spritzrohres angelenkt ist.

Diese Verkettung von mehreren kinematisch hintereinander geschalteten Schubstangen ist eine baulich sehr einfache und ebenso effektive wie robuste Möglichkeit, eine Vielzahl von Spritzrohren mit einem einzigen Motor schwenkend anzutreiben. In vielen Fällen ist es ganz ideal, wenn wirklich nur ein einziger Motor zum Einsatz kommt, um alle verbauten Spritzrohre zu hin und her zu schwenken.

Bevorzugt ist es so, dass die Schubstangen innerhalb der Reinigungskammer angeordnet sind. Das vereinfacht den Bauaufwand weiter. Eine derartige Ausgestaltung ist möglich, weil Schubstangen der hier verwendeten Art und ihre Lagerungen extrem robust sind und ihnen daher auch die permanente Beaufschlagung mit dem Reinigungsfluid nichts anhaben kann.

Idealerweise sind die Schubstangen, über die die ersten Spritzrohre mit der Motorabtriebswelle verbunden sind, unterschiedlich lang. Hierdurch entsteht die konstruktive Freiheit, den elektrischen Antrieb an einer Stelle zu positionieren, wo er unter Bauraumgesichtspunkten und/oder unter dem Gesichtspunkt guter Reparaturzugänglichkeit am besten unterzubringen ist. Der Konstrukteur ist nicht länger darauf angewiesen, den elektrischen Antrieb äquidistant zwischen den unmittelbar durch die ersten Schubstangen angetriebenen Spritzrohren zu positionieren.

Sinnvollerweise sind die Schubstangen, über die die weiteren Spritzrohre mit den ihnen zugeordneten ersten Spritzrohren verbunden sind, gleich lang. Die Verwendung möglichst vieler Gleichteile wirkt sich positiv auf die Kosten aus.

Bevorzugt ist es so, dass die Spritzrohre zumindest im Wesentlichen parallel zueinander verlaufen, jedenfalls aber in der Mitte zwischen sich einen Reinigungsraum freilassen, der das Reinigungsgut aufnimmt und in den alle Spritzrohre abspritzen.

Vorzugsweise ist in dem Reinigungsraum ein Reinigungskorb oder ein Reinigungsrost gehalten, in oder auf dem das Reinigungsgut gehalten bzw. festgehalten werden kann, z. B. magnetisch oder mit Pratzen. Idealerweise rotiert der Reinigungsrost oder Reinigungskorb, bevorzugt um eine Achse, die zumindest im Wesentlichen parallel zu den Längsachsen der Spritzrohre verläuft. Der Schwenkbewegung der - ansonsten nicht zwingend, aber bevorzugt ortsfesten - Spritzrohre wird dadurch eine kreisende Bewegung des Reinigungsguts überlagert. Hieraus ergibt sich eine besonders effektive Reinigung, denn jeder Oberflächenbereich wird in schnellem Wechsel immer wieder aus einem anderen Winkel von den Fluidstrahlen getroffen, es gibt kaum noch dauerhaft "abgeschattete" Bereiche.

Idealerweise ist der Reinigungskorb oder Reinigungsrost mit einem eigenen, vom Antrieb der Spritzrohre unabhängig ansteuerbaren Antrieb ausgestattet. Auf diese Art und Weise kann so angesteuert werden, dass die Schwenkposition der Spritzrohre immer wieder anders ist, wenn der Reinigungskorb oder Reinigungsrost eine bestimmte Drehposition erreicht. Erst nach geraumer Zeit wird sich die schon einmal durchlaufene Sequenz wiederholen.

Idealerweise können die Spritzrohre nicht nur geschwenkt, sondern zusätzlich auch noch in Richtung entlang ihrer Längsachsen hin und her verfahren werden. Auf diese Art und Weise kann sichergestellt werden, dass im Zuge eines Reinigungszyklus jeder Oberflächenbereich des Reinigungsguts einmal auf kürzestem bzw. unmittelbarem Wege von dem energiereichen Strahl des Reinigungsfluids getroffen wird.

Zu diesem Zweck ist es besonders günstig, wenn die Spritzrohre und ihr Antrieb samt Schubstangen an einem Hilfsrahmen gehalten sind, der an Linearführungen gegenüber dem ortsfesten Gestell der Spritzreinigungsanlage verfahrbar gelagert ist.

Für extreme Reinigungsanwendungen kann es günstig sein, wenn die Spritzrohre und ihr Antrieb samt Schubstangen an einem Hilfsrahmen gehalten sind, der rotierbar in der Reinigungskammer gelagert ist. Dann können die Spritzrohre um das zu reinigende Gut kreisen und dabei gleichzeitig eine der kreisenden Bewegung überlagerte Schwenkbewegung ausführen. Das sorgt für eine besonders aggressive Reinigung.

Um den konstruktiven Aufwand klein zu halten, ist es besonders günstig, wenn beide der vorgenannten Hilfsrahmen durch ein und denselben Hilfsrahmen gebildet werden.

Zweckmäßigerweise ist die Reinigungskammer über eine Tür an der Stirnseite be- und entladbar, im Bereich derer die Spritzrohre mit ihren freien Enden enden. Dabei verläuft die Ebene, in der die geschlossene Tür liegt, im Wesentlichen senkrecht zu den Längsachsen der Spritzrohre.

Alternativ kann es sinnvoll sein, wenn die Reinigungskammer eine Durchlaufkammer mit zwei offenen Stirnseiten ist, durch die das Reinigungsgut im Wesentlichen parallel zu den Drehachsen der Spritzrohre hindurchgeschleust wird.

Weitere Wirkungsweisen, Vorteile und Ausgestaltungsmöglichkeiten ergeben sich aus der figurengestützten Beschreibung des Ausführungsbeispiels.

### FIGURENLISTE

Die Figur 1 zeigt den hier den Ausgangspunkt bildenden Stand der Technik.
Die Figur 2 zeigt ein erfindungsgemäßes Ausführungsbeispiel, stark vereinfacht, aber repräsentativ, ohne Bottich, Grundgestell und dergleichen, und noch vor der Montage der Zusatzspritzrohre.
Die Figur 3 zeigt die einseitige Lagerung eines Spritzrohrs, bei gleichzeitiger Versorgung mit Reinigungsfluid.
Die Figur 4 zeigt das Register, das auch in der Figur 2 zu erkennen ist, jetzt aber mit erfindungsgemäß angebauten Zusatzspritzrohren.

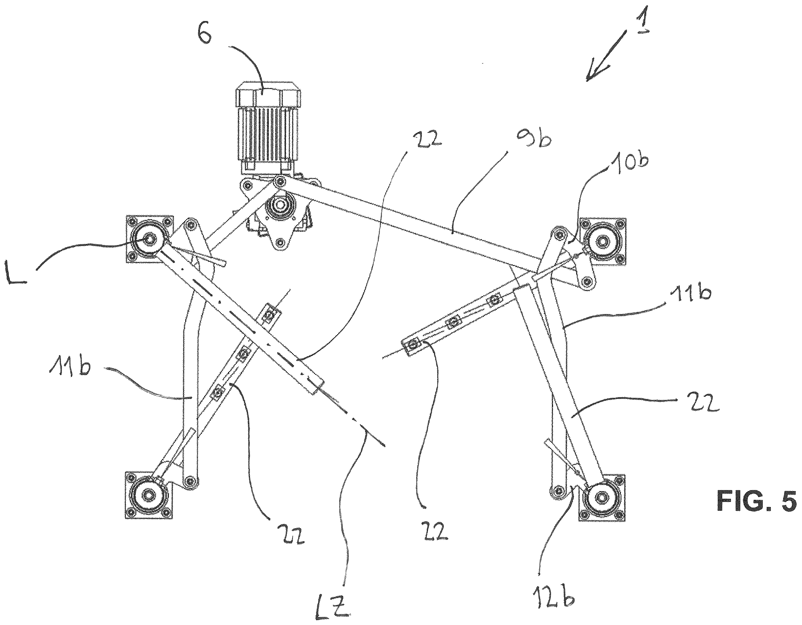

Die Figur 5 zeigt eine andere Darstellung der Figur 4.

### AUSFÜHRUNGSBEISPIELE

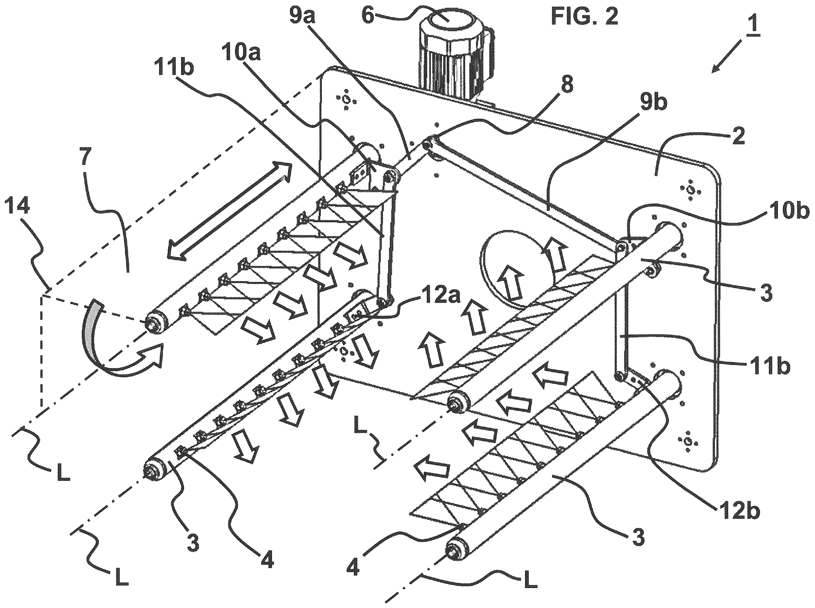

Die grundlegende Funktionsweise der erfindungsgemäßen Spritzreinigungsmaschine 1 wird nun anhand der schematisch ausgeführten Figur 2 erläutert. Im Anschluss daran werden weitere Ausführungsbeispiele erläutert.

Aufgrund ihres schematischen Charakters verzichtet die Figur 2 darauf, das ortsfeste Grundgestell der Spritzreinigungsmaschinen zu zeigen und den vorzugsweise davon getragenen Bottich, der in den meisten Fällen die Reinigungskammer bildet. Der Bottich 14 und die von ihm gebildete Reinigungskammer 7 sind in Figur 2 lediglich durch gestrichelte Linien angedeutet. Um ungehindert die Grundfunktion der erfindungsgemäßen Spritzreinigungsmaschine zeigen zu können, zeigt die Figur 2 den Zustand noch vor der Montage der Zusatzspritzrohre.

Bei der hier vorgestellten ersten Ausführungsform mag die Platte 2 eine feste Stirnseite des Bottichs 14 darstellen. Wenn die Maschine als Frontlader ausgeführt ist, wird der Bottich 14 von der der Platte 2 gegenüberliegenden Stirnseite her beladen und ist nach dem Beladen durch eine Tür oder Klappe verschließbar.

An der Platte 2 sind bei diesem Ausführungsbeispiel vier Spritzrohre 3 gelagert, die von der Platte aus in die Reinigungskammer 7 hineinragen, meist entlang der Ecken der Reinigungskammer 7 - bevorzugt so, dass die Längsachsen L der Spritzrohre 3 zumindest im Wesentlichen horizontal verlaufen. Die Spritzrohre 3 können dabei entweder nach Art von nur einseitig gelagerten Kragträgern in die Reinigungskammer hineinragen. Ihr der Platte 2 abgewandtes Ende ist dann frei und kann durch einen einfach abnehmbaren Deckel verschlossen sein, was die Revision der Spritzrohre erleichtert. Alternativ sind die der Platte 2 abgewandten Enden der Spritzrohre ihrerseits jeweils schwenkbar gelagert, beispielsweise an der anderen Stirnseite des Bottichs, sodass jedes Spritzrohr an zwei Lagerstellen gehalten wird, was hier aber nicht figürlich dargestellt ist.

Die Spritzrohre 3 schließen zwischen sich einen Behandlungsraum ein, in den in Figur 2 nicht gezeigtes Reinigungsgut eingebracht werden kann.

Wie man sieht, weist jedes Spritzrohr 3 bei diesem Ausführungsbeispiel eine Reihe von Öffnungen auf. Über diese Öffnungen wird jeweils ein Strahl aus Reinigungsfluid in Richtung des im Behandlungsraum befindlichen Reinigungsguts geworfen. Jedes Spritzrohr 3 bildet dann ein kurz "Register" genanntes Spritzregister.

Die besagten Öffnungen sind hier bevorzugt mit Düsen 4 bestückt, die die Austrittsgeschwindigkeit des von ihnen ausgegebenen Strahls aus dem Reinigungsfluid meist vergrößern und sehr oft den Strahl auch bündeln. Typischerweise sind die Düsen bzw. die Innendurchmesser der Spritzrohre so gewählt, dass aus allen Düsen Fluidstrahlen mit vergleichbarer Geometrie und Intensität ausgegeben werden, zumindest im Wesentlichen. Auf diese Art und Weise wird das Reinigungsgut gleichmäßig beaufschlagt. Die Düsen beeinflussen durch ihre Geometrie das Reinigungsverhalten gravierend: Insoweit wichtige Parameter sind Impact, Strahlwinkel und Tropfengröße. Auch die Anordnung der Düsen relativ zum Reinigungsgut spielt eine wichtige Rolle.

Idealerweise kommen Verstelldüsen zum Einsatz, deren Abstrahlwinkel sich einstellen lässt, ohne dass die Düsen an ihrer Substanz geändert werden müssen.

Als Reinigungsfluid kommt wegen seiner Unbedenklichkeit und guten Wiederaufbereitbarkeit in der weit überwiegenden Zahl der Fälle und daher klar bevorzugt Wasser zum Einsatz - ggf. unter Beigabe von Reinigungszusätzen, wie etwa Tensiden. Die Drücke des Fluid- bzw. Wasserstrahls liegen typischerweise bei 1 bar bis 60 bar, man spricht dann vom Niederdruckreinigen. Ein anderer ebenfalls typischer und für die Erfindung optional besonders relevanter Druckbereich liegt im Bereich von 100 bar bis 200 bar, man spricht dann vom Hochdruckreinigen bzw. Hochdruckentgraten.

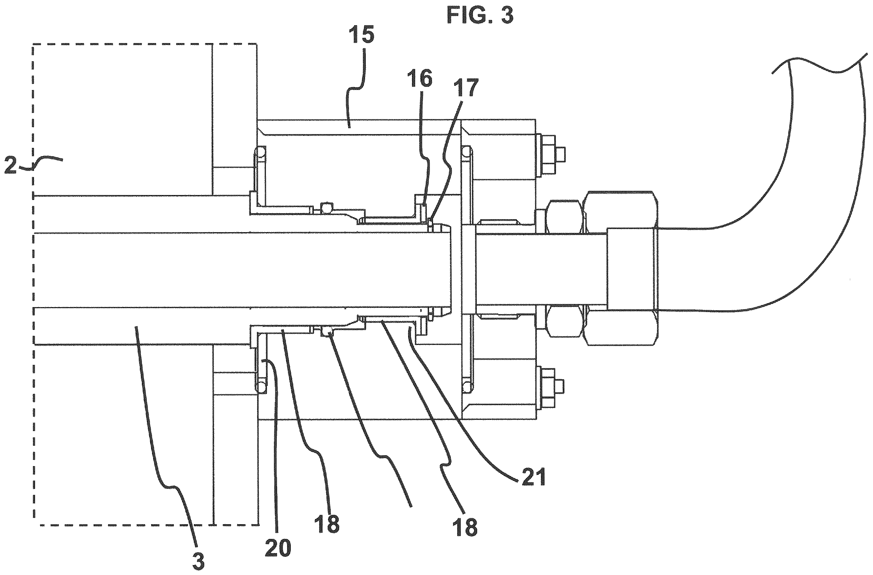

Die Fluidversorgung der Spritzrohre 3 findet an der dem Betrachter der Figur 2 abgewandten Rückseite der Platte 2 statt, mittels der Speiser 5, die vorzugsweise so beschaffen sind, wie das die Figur 3 im Detail zeigt.

Nicht zwingend, aber vorteilhafterweise umfasst ein Speiser einen Sockel 15, in den das jeweilige Spritzrohr 3 in axialer Richtung im Wesentlichen festliegend, aber frei drehbar gehalten ist. An den Sockel 15 ist der Fluidzulauf angeflanscht.

Das benötigte Halten des Spritzrohrs 3 wird hier beispielsweise durch die Scheibe 16 und den Sicherungsring 17 bewerkstelligt. Letzterer hält das durchmesserreduzierte Ende des Spritzrohrs 3 - meist unter Zwischenlage von Gleitbuchsen 18 -zwischen des Absätzen 19 und 20 des Sockels 15 axial gefangen. Die eigentliche Abdichtung des Spritzrohrs kann dann über den z. B. als Schnurdichtung ausgeführten Dichtring 21 erfolgen.

In vielen Fällen wird für jedes Spritzrohr 3 ein eigener solcher Speiser eingesetzt.

Das Hin- und Herschwenken der Spritzrohre 3 wird durch den bevorzugt ebenfalls an der Rückseite der Platte 2 angebrachten Elektromotor 6 bewerkstelligt. Günstig ist es, wenn die Nenndrehzahl dieses Elektromotors 6 durch ein Schneckengetriebe oder ein sonstiges geeignetes Getriebe bzw. Winkelgetriebe ins Langsame übersetzt wird, so wie das bei dem von Figur 2 gezeigten Ausführungsbeispiel angedeutet ist. Der Motor 6 kann dann platzsparend auf der Rückseite der Platte 2 angeordnet werden, weil die eigentliche Motordrehachse rechtwinklig zu den Schwenkachsen der Spritzrohre 3 verläuft.

Der Abtriebszapfen des Elektromotors 6 bzw. seines besagten Getriebes ragt im Regelfall durch eine - optional mit Hilfe einer geeigneten Dichtung fluiddicht verschlossenen - Öffnung in der Platte 2 in die Reinigungskammer 7 hinein und zwar bei diesem Ausführungsbeispiel im Bereich oberhalb des Durchtritts der oberen Spritzrohre 3 durch die Platte 2. Dort trägt oder bildet er einen Exzenter 8, an dem die ersten Schubstangen 9a und 9b mit ihrem ersten Ende drehbar angelenkt sind. Wie man gut erkennen kann, ist das zweite Ende jeder der ersten Schubstangen 9a und 9b jeweils an einem Exzenterbeschlag 10a bzw. 10b drehbar angelenkt, der jeweils an einem ihm zugeordneten ersten Spritzrohr 3 befestigt ist.

Gut anhand der Figur 2 zu erkennen ist, dass die beiden ersten Schubstangen 9a und 9b unterschiedliche Längen aufweisen. Der Längenunterschied ist dabei vorzugsweise deutlich ausgeprägt. Die Schubstange 9b ist idealerweise mindestens um den Faktor 2,5 länger als die Schubstange 9a, so wie das hier gezeigt ist.

Zusätzlich zu den beiden unmittelbar durch die ersten Schubstangen 9a und 9b angetriebenen ersten Spritzrohren 3 sind weitere Spritzrohre 3 vorgesehen, die bei diesem Ausführungsbeispiel unterhalb der erstgenannten Spritzrohre liegen. Auch diese weiteren Spritzrohre 3 sind schwenkbar gelagert.

Wie man sieht, sind zum Antrieb der weiteren Spritzrohre 3 weitere Schubstangen 11a und 11b vorgesehen. Jede dieser Schubstangen 11a und 11b ist mit ihrem ersten Ende an dem Exzenterbeschlag 10a und 10b der ersten Spritzrohre 3 drehbar angelenkt und zwar bevorzugt an einer Stelle, die sich von der Anlenkstelle der ersten Schubstangen 9a bzw. 9b an ihnen unterscheidet. Das andere Ende der beiden weiteren Schubstangen 11a und 11b ist jeweils an einem weiteren Exzenterbeschlag 12a bzw. 12b drehbar angelenkt, der jeweils an einem ihm zugeordneten weiteren Spritzrohr 3 befestigt ist.

Die beiden weiteren Schubstangen 11a und 11b weisen hier die gleiche Länge auf, absolut zwingend ist diese bevorzugte Ausgestaltungsart allerdings nicht.

Die ersten und zweiten Schubstangen 9a, 9b; 11a, 11b bilden hier also jeweils eine Kette aus mehreren kinematisch hintereinandergeschalteten Schubstangen 9a und 11a bzw. 9b und 11b, die unter Wechsel ihrer Schubrichtung im Bereich des Übergangs von einer auf die nächste Schubstange mehrere Spritzrohre hin und herschwenken - obwohl alle Schubstangen eines solchen Sets nur von einem einzigen Elektromotor 6 angetrieben werden. Dabei treiben die ersten Schubstangen 9a, 9b die nachgeschalteten weiteren Schubstangen 11a, 11b an.

Auch wenn das von der Figur 2 nicht gezeigt wird, ist anhand der Figur 2 klar, dass die erfindungsgemäße Verkettung der Schubstangen weiter fortgesetzt werden kann, beispielsweise um ein drittes Paar tertiärer Spritzrohre durch dritte Schubstangen anzutreiben, die beispielsweise in ähnlicher Art und Weise an den weiteren Exzenterbeschlägen 12a und 12b angelenkt sind, wie die zweiten Schubstangen an den Exzenterbeschlägen 10a und 10b.

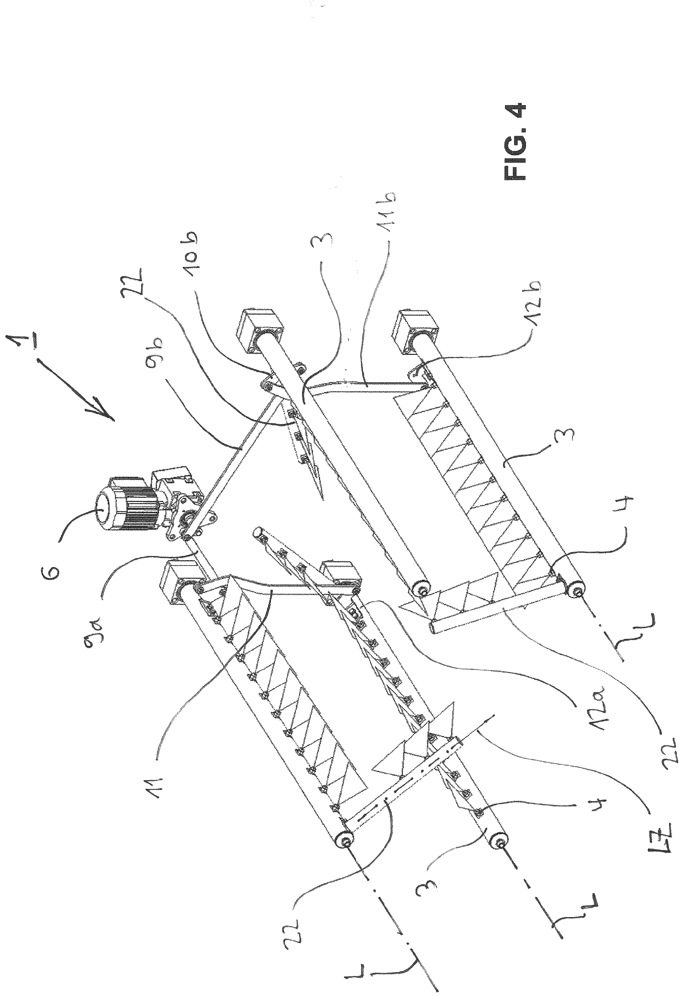

Die Figur 4 zeigt das gleiche Register aus mehreren, in der Regel parallelen Spritzrohren 3, das eben anhand der Fig. 2 erläutert worden ist. Das Gesagte gilt daher auch hier.

Die Fig. 4 zeigt nun aber den fertig montierten Zustand, also das Register mit den erfindungsgemäß angebauten Zusatzspritzrohren 22. Hier ist ein "Direktantrieb" ausgeführt. Das jeweilige Zusatzspritzrohr 22 ist zu diesem Zweck fest an das es tragende Spritzrohr 3 angebaut bzw. angeflanscht, im vorliegenden Fall bevorzugt derart, dass sich die Zusatzspritzrohrlängsachse orthogonal zur Längsachse des es tragenden Spritzrohrs 3 erstreckt. Zumeist schneiden sich die beiden besagten Achsen sogar, was aber lediglich bevorzugt so ist.

Wenn sich das Spritzrohr 3 hin und her dreht, pendelt das Zusatzspritzrohr 22 daher ("scheibenwischerartig") hin und her. Es bestreicht hierdurch die Seite des zu reinigen Gutes, die ansonsten niemals direkt bestrichen wird - solange sich nicht der Korb oder Reinigungsguthalter dreht. Aber auch bei sich drehendem Korb oder Reinigungsguthalter wird die Reinigungswirkung deutlich verbessert, da mehr Spritzstrahlen pro Zeiteinheit auf das zu reinigende Gut einwirken.

Wie hier bei genauem Hinsehen zu erkennen ist, trägt jedes der Zusatzspritzrohre 22 an seiner dem es tragenden Spritzrohr zugewandten Seite einen Flansch. Der Flansch hat typischerweise eine sattelförmig gekrümmte Gestalt, ist also an die Umfangsmantelfläche des Spritzrohres angepasst, gegen das er verschraubt werden soll. Das oben zu den Befestigungsalternativen Gesagte gilt aber auch hier sinngemäß.

Hier zweigt das Zusatzspritzrohr 22 also von der Umfangsmantelfläche des es tragenden Spritzrohrs 3 ab - wie man sieht in einem Bereich, der direkt an das Stirnende angrenzt oder in einem Nahbereich des Stirnendes, ggf. bis zu 15 cm entfernt hiervon. Die Umfangsmantelfläche ist unter dem Flansch angebohrt und versorgt das Zusatzspritzrohr 22 über diese Bohrung mit dem benötigten Spritzfluid. Die Bohrung kann als Blende oder Düse mit einem Strömungswiderstand ausgeführt sein, der sicherstellt, dass nicht mehr als die gewünschte Menge des Spritzfluids über das Zusatzspritzrohr abfließt.

Gesagt sei, dass das Zusatzspritzrohr 22 alternativ auch L-förmig gebogen sein kann - um dann dadurch an das es tragende Spritzrohr angebaut zu werden, dass es mit einem seiner L-Schenkel an der freien Stirnquerschnittsfläche eines Spritzrohres 3 in dessen Inneres eingeschoben oder eingeschraubt wird, ggf. unter Abdichtung durch eine Schnurdichtung.

Darüber hinaus sieht man anhand der Fig. 4, dass das Register aus den Spritzrohren 3 weitere Zusatzspritzrohre 22 aufweisen kann, die an dem antriebsseitigen Ende des jeweiligen Spritzrohres 3 gehalten bzw. angeflanscht sind und daher von ihm ebenfalls "scheibenwischerartig" hin und her geschwenkt werden. Besonders günstig ist es, wenn das jeweilige Zusatzspritzrohr 22 in einem Bereich des Spritzrohres von diesem gehalten wird, der in axialer Richtung gesehen zwischen dem Drehlager des betreffenden Spritzrohrs liegt und der es antreibenden Schubstange.

Wie man ebenfalls anhand der Fig. 4 sieht, ist es eine besonders vorteilhafte Option, die in Umfangsrichtung gesehen hintereinander folgenden Spritzrohre des Registers immer abwechselnd an ihrem freien Stirnende und an ihrem antriebsseitigen Stirnende mit einem Zusatzspritzrohr 22 zu bestücken.

Jedenfalls bei einem aus vier Spritzrohren bestehenden Register ist es günstig, die Zusatzspritzrohre so anzuordnen, dass zwei maximal voneinander beabstandete Spritzrohre jeweils mindestens ein Zusatzspritzrohr an ihrem freien Stirnende tragen und/oder dass zwei maximal voneinander beabstandete Spritzrohre jeweils mindestens ein Zusatzspritzrohr an ihrem antriebsseitigen Stirnende tragen.

Um die Reinigungswirkung weiter zu erhöhen, kann es sinnvoll sein, den hier nicht gezeigten Rost oder Korb zur Befestigung bzw. Aufnahme des Reinigungsguts während des Reinigungszyklus rotieren zu lassen. Wie die Figur 2 zeigt, hat die Platte 2 zu diesem Zweck dann eine meist zentrale Öffnung 13, durch die eine Antriebswelle von außerhalb in die Reinigungskammer 7 hereinragen kann, die den Rost oder Korb hält und rotieren lassen kann. Es versteht sich von selbst, dass die Öffnung 13 nötigenfalls mit einer entsprechenden Dichtung zusammenwirkt, um sie fluiddicht abzudichten.

Die Figur 2 veranschaulicht dem fachkundigen Betrachter auch noch eine weitere interessante Variante, auch wenn sie diese nicht ausführlich darstellt. Optional kann die hier gezeigte Vorrichtung so ausgestaltet werden, dass die Spritzrohre 3 in Richtung entlang ihrer Längsachsen L translatorisch verfahrbar sind.

Alternativ oder (eher selten) zusätzlich kann aber auch das Reinigungsgut in besagter Richtung verfahrbar gehalten sein, beispielsweise in seinem entsprechend ausgestalteten und angetriebenen Reinigungskorb oder auf seinem entsprechenden Reinigungsrost.

Im einfachsten Fall wird das dadurch realisiert, dass die von Figur 2 gezeigte Platte 2 kein fester Bestandteil einer Stirnseite des Bottichs 14 ist. Stattdessen ist die Platte 2 bei dieser Variante des Ausführungsbeispiels dann innerhalb des Bottichs 14 translatorisch hin und her verfahrbar und mit ihr auch die an ihr gelagerten Spritzrohre, die an ihr gelagerten Schubstangen und der von ihr getragene Elektromotor 6.

Alternativ ist natürlich auch denkbar, dass die Platte 2 doch einen festen Bestandteil der Stirnseite des Bottichs 14 bildet. In diesem Fall ist dann ein auf der dem Betrachter abgewandten Rückseite der Platte 2 angeordneter, in Figur 2 nicht zu erkennender Hilfsrahmen vorgesehen. Dieser Hilfsrahmen trägt den Elektromotor 6 und die Spritzrohre 3. Bei richtiger Dimensionierung können dann durch translatorisches hin und her Bewegen des Hilfsrahmens die Spritzrohre und die an ihnen befestigten Schubstangen um einen bestimmten Betrag entlang der Längsachse L der Spritzrohre hin und her bewegt werden.

Der Vollständigkeit halber sei gesagt, dass es in bestimmten Anwendungsfällen sinnvoll sein kann, die Exzenterbeschläge 10a, 10b und/oder 12a, 12b mit einem Klemmsitz an den Spritzrohren festzulegen, was hier nicht figürlich dargestellt ist. Denn dann kann der Klemmsitz gelöst und wieder festgezogen werden, nachdem das Spritzrohr gegenüber dem Exzenterbeschlag ein Stück weit verdreht worden ist. Auf diese Art und Weise kann rationell der Bereich eingestellt werden, den das betreffende Spritzrohr bestreicht. In anderen Fällen lässt sich das aber auch schon durch Einstellen des Düsenabspritzwinkels erreichen.

### ALLGEMEINES

Verallgemeinernd sei gesagt, dass auch Schutz beansprucht wird, auch in Verbindung mit bereits aufgestellten Unteransprüchen oder weiteren Beschreibungsmerkmalen, für:
Spritzreinigungsmaschine mit mehreren Spritzrohren 3, die bevorzugt jeweils mehrere Düsen 4 zum Abspritzen des Reinigungsgutes mit dem Reinigungsfluid aufweisen, die sich dadurch auszeichnet, dass die mehreren Spritzrohre 3 um ihre als solche ortsfeste Längsachse L rotierend schwenkbeweglich gelagert sind und die mehreren Spritzrohre 3 gruppenweise oder, bevorzugt, alle von einem gemeinsamen Antrieb hin- und herschwenkend angetrieben werden.

Schutz wird auch dafür beansprucht, dass die Spritzreinigungsmaschine zusätzlich zu oder unabhängig von den bereits beanspruchten Merkmalen mindestens eines der im Folgenden absatzweise genannten Merkmale aufweist:
Die Spritzreinigungsmaschine zeichnet sich dadurch aus, dass die Schubstangen 9a, 9b, über die die ersten Spritzrohre 3 mit der Motorabtriebswelle bzw. deren Exzenter 8 verbunden sind, unterschiedlich lang sind.

Die Spritzreinigungsmaschine zeichnet sich dadurch aus, dass die weiteren Schubstangen 11a, 11b, über die die weiteren Spritzrohre 3 mit den ihnen zugeordneten ersten Spritzrohren 3 verbunden sind, gleich lang sind.

Die Spritzreinigungsmaschine zeichnet sich dadurch aus, dass die Spritzrohre 3 in der Mitte zwischen sich einen Reinigungsraum freilassen, der das Reinigungsgut aufnimmt und in den alle Spritzrohre 3 abspritzen.

Die Spritzreinigungsmaschine zeichnet sich dadurch aus, dass in dem Reinigungsraum ein Reinigungskorb gehalten wird.

Die Spritzreinigungsmaschine zeichnet sich dadurch aus, dass der Reinigungskorb rotiert, bevorzugt um eine Achse, die zumindest im Wesentlichen parallel zu den Längsachsen L der Spritzrohre 3 verläuft.

Die Spritzreinigungsmaschine zeichnet sich dadurch aus, dass der Reinigungskorb einen eigenen, vom Antrieb der Spritzrohre 3 unabhängig ansteuerbaren Antrieb besitzt.

Die Spritzreinigungsmaschine zeichnet sich dadurch aus, dass die Spritzrohre 3 nicht nur geschwenkt, sondern zusätzlich auch noch in Richtung entlang ihrer Längsachsen L verfahren werden können.

Die Spritzreinigungsmaschine zeichnet sich dadurch aus, dass die Spritzrohre 3 und ihr Antrieb bzw. Motor 6 samt Schubstangen 9a, 9b, 11a, 11b an einem Hilfsrahmen gehalten sind, der an Linearführungen gegenüber dem ortsfesten Gestell der Kammerreinigungsanlage gelagert ist.

Die Spritzreinigungsmaschine zeichnet sich dadurch aus, dass das die Spritzrohre 3 und ihr Antrieb bzw. Motor 6 samt Schubstangen 9a, 9b, 11a, 11b an einem Hilfsrahmen gehalten sind, der rotierbar in der Reinigungskammer 7 gelagert ist, sodass die Spritzrohre 3 um das zu reinigende Gut kreisen und dabei gleichzeitig eine Schwenkbewegung ausführen können.

Die Spritzreinigungsmaschine zeichnet sich dadurch aus, dass die genannten Hilfsrahmen durch ein und denselben Hilfsrahmen gebildet werden.

Die Spritzreinigungsmaschine zeichnet sich dadurch aus, dass die Reinigungskammer 7 über eine Tür an der Stirnseite be- und entladbar ist, im Bereich derer die Spritzrohre 3 mit ihren freien Enden enden, wobei die Ebene, in der die geschlossene Tür liegt, im Wesentlichen senkrecht zu den Längsachsen L der Spritzrohre 3 verläuft.

Die Spritzreinigungsmaschine zeichnet sich dadurch aus, dass die Reinigungskammer 7 eine Durchlaufkammer mit zwei offenen Stirnseiten ist, durch die das Reinigungsgut im Wesentlichen parallel zu den Drehachsen der Spritzrohre 3 hindurchgeschleust wird.

### BEZUGSZEICHENLISTE

- 1: Spritzreinigungsmaschine
- 2: Platte
- 3: Spritzrohr
- 4: Düse
- 5: Speiser
- 6: Elektromotor
- 7: Reinigungskammer
- 8: Exzenter
- 9a: erste Schubstange (z. B. links)
- 9b: erste Schubstange (z. B. rechts)
- 10a: erster Exzenterbeschlag (z. B. links)
- 10b: erster Exzenterbeschlag (z. B. rechts)
- 11a: weitere Schubstange (z. B. links)
- 11b: weitere Schubstange (z. B. rechts)
- 12a: weiterer Exzenterbeschlag (z. B. links)
- 12b: weiterer Exzenterbeschlag (z. B. rechts)
- 13: zentrale Öffnung
- 14: Bottich
- 15: Sockel des Speisers
- 16: Scheibe des Speisers
- 17: Sicherungsring des Speisers
- 18: Gleitbuchse des Speisers
- 19: Absatz des Sockels des Speisers
- 20: Absatz des Sockels des Speisers
- 21: der die Rotation ermöglichende Dichtring des Speisers
- 22: Zusatzspritzrohr

- L: Längsachse eines Spritzrohrs
- LZ: Zusatzspritzrohrlängsachse

## Patentansprüche

1. Spritzreinigungsmaschine (1) bevorzugt in Gestalt einer Kammerreinigungsanlage mit einer Reinigungskammer (7), in die das Reinigungsgut eingebracht wird, und mehreren in der Reinigungskammer (7) hineinragenden Spritzrohren (3), die bevorzugt jeweils mehrere Düsen (4) zum Abspritzen des Reinigungsgutes mit dem Reinigungsfluid aufweisen, wobei die mehreren Spritzrohre (3) um ihre als solche ortsfeste Längsachse (L) rotierend schwenkbeweglich gelagert sind und die mehreren Spritzrohre (3) gruppenweise oder, bevorzugt, alle von einem gemeinsamen Antrieb hin- und herschwenkend angetrieben werden, **dadurch gekennzeichnet, dass** von den mehreren Spritzrohren (3) zumindest eines, besser zumindest zwei jeweils mit mindestens einem Zusatzspritzrohr (22) gekoppelt sind, dessen Zusatzspritzrohrlängsachse (LZ) quer und bevorzugt orthogonal zur Längsachse (L) des betreffenden Spritzrohrs (3) verläuft.

2. Spritzreinigungsmaschine (1) nach Anspruch 1, **dadurch gekennzeichnet, dass** das oder die Zusatzspritzrohre (22) jeweils mehrere Spritzdüsen (4) aufweisen.

3. Spritzreinigungsmaschine (1) nach einem der vorhergehenden Ansprüche, **dadurch gekennzeichnet, dass** das oder die Zusatzspritzrohre (22) jeweils von einem Spritzrohr (3) bevorzugt über eine Öffnung in dessen Mantelfläche mit Spritzflüssigkeit gespeist werden.

4. Spritzreinigungsmaschine (1) nach einem der vorhergehenden Ansprüche, **dadurch gekennzeichnet, dass** das oder die Zusatzspritzrohre (22) jeweils einen entsprechend gekrümmten Anschlussflansch haben, der dichtend gegen die Mantelfläche des betreffenden Spritzrohres (3) anliegt.

5. Spritzreinigungsmaschine (1) nach einem der vorhergehenden Ansprüche, **dadurch gekennzeichnet, dass** das mindestens eine Zusatzspritzrohr (22) jeweils mit dem es tragenden Spritzrohr (3) verschraubt ist.

6. Spritzreinigungsmaschine (1) nach einem der vorhergehenden Ansprüche, **dadurch gekennzeichnet, dass** mindestens ein Spritzrohr (3) an seinem völlig freien Ende mit einem Zusatzspritzrohr (22) gekoppelt ist und mindestens ein Spritzrohr (3) an seinem antriebsseitigen Ende mit einem Zusatzspritzrohr (22) gekoppelt ist.

7. Spritzreinigungsmaschine (1) nach einem der vorhergehenden Ansprüche, **dadurch gekennzeichnet, dass** die Spritzreinigungsmaschine (1) vier achsparallel zueinander angeordnete Spritzrohre (3) aufweist, und ein erstes Paar Spritzrohre (3) aus zwei maximal voneinander entfernten Spritzrohren (3) jeweils am freien Spritzrohrende mit zwei Zusatzspritzrohren (22) gekoppelt ist und/oder ein zweites Paar Spritzrohre (3) aus zwei maximal voneinander entfernten Spritzrohren (3) jeweils am antriebsseitigen Spritzrohrende mit zwei Zusatzspritzrohren (22) gekoppelt ist.

8. Spritzreinigungsmaschine (1) nach einem der vorhergehenden Ansprüche, **dadurch gekennzeichnet, dass** mindestens ein erstes Spritzrohr (3) durch eine erste Schubstange (9a) oder besser mindestens zwei erste Spritzrohre (3) durch jeweils eine erste Schubstange (9a; 9b) angetrieben werden, die exzentrisch an der um sich selbst rotierenden Motorabtriebswelle angelenkt ist.

9. Spritzreinigungsmaschine (1) nach Anspruch 8, **dadurch gekennzeichnet, dass** mindestens ein weiteres und bevorzugt mehrere weitere Spritzrohre (3) jeweils durch eine weitere Schubstange (11a; 11b) angetrieben werden, die auf ihrer Antriebsseite an einem Exzenterbeschlag (10a, 10b) eines vorhergehenden Spritzrohres (3) angelenkt ist und über diesen angetrieben wird, und auf ihrer Abtriebsseite an einem weiteren Exzenterbeschlag (12a, 12b) des weiteren Spritzrohres (3) angelenkt ist, und/oder **dadurch gekennzeichnet, dass** die Schubstangen (9a, 9b, 11a, 11b) innerhalb der Reinigungskammer (7) angeordnet sind.
